# EUROPEAN PATENT APPLICATION

(11) **EP 4 336 036 A1**
(43) Date of publication of application: **13.03.2024**
(21) Application number: 23196971.8
(22) Date of filing: 12.09.2023
(51) Int. Cl.: F02D 19/02, F02D 19/06, F02D 41/00, F02D 41/30, F02D 41/40, F02M 21/02

(54) **CONTROL SYSTEM AND METHOD FOR HYDROGEN FUELLED INTERNAL COMBUSTION ENGINE**

(30) Priority: 12.09.2022 GB 202213276
(71) Applicant: Jaguar Land Rover Limited, Coventry, Warwickshire CV3 4LF (GB)
(72) Inventor: Sankesh, Durgada, Coventry, CV3 4LF (GB); Jones, Peter, Coventry, CV3 4LF (GB)
(74) Representative: Jaguar Land Rover Patents Department

(57) **Abstract**

Aspects of the present invention relate to a control system and method for a hydrogen fuelled internal combustion engine (100) of a vehicle. The control system (120) is configured to receive an indication of a pressure of hydrogen in a hydrogen storage system (210). In dependence on the pressure being above a threshold pressure value, the control system (120) operates the internal combustion engine (100) in a first mode by controlling a fuel injector (115) to inject hydrogen gas from the storage system into a cylinder (104) of the internal combustion engine within a first fuel injection window (330). In dependence on the pressure being below the threshold pressure value, the control system operates the internal combustion engine in a second mode by controlling the fuel injector to inject the hydrogen gas into the cylinder within a second fuel injection window (340). The first fuel injection window (330) extends later into the compression stroke than the second fuel injection window (340).

## Description

### TECHNICAL FIELD

The present disclosure relates to the control of a hydrogen fuelled internal combustion engine. Aspects of the invention relate to a control system, to an internal combustion engine, to an internal combustion system, to a vehicle, to a method and to a computer-readable medium.

### BACKGROUND

Hydrogen gas has beneficial properties as a fuel for internal combustion engines (ICEs) including having a high energy content per unit mass, wider flammability limits and higher-octane number. Because hydrogen burns quickly, it can be exploited to burn air-fuel mixtures leaner than stoichiometric conditions, unlike other traditional liquid fuels such as gasoline. This fast burning nature also however poses challenges such as an increased likelihood of pre-ignition.

By injecting the hydrogen fuel into the cylinder of the ICE relatively late during the compression stroke close to the ignition event, pre-injection can be avoided. Such a late injection also results in a stratified mixture at the time of ignition, which can result in improved thermodynamic efficiency. However, the fuel pressure in the fuel rail must be maintained significantly higher than the in-cylinder pressure during the injection. As the in-cylinder pressure is higher close to the ignition event, a high pressure in the fuel rail is required to achieve such a late injection. As the fuel tank depletes, the pressure in the fuel rail decreases. Thus, use of a late injection either means that the range achievable by the fuel tank is reduced, or a compressor is required to increase the pressure in the fuel rail, which increases the cost and bulk of the vehicle.

It is an aim of the present invention to address one or more of the disadvantages associated with the prior art.

### SUMMARY OF THE INVENTION

Aspects and embodiments of the invention provide a control system, a vehicle, and a computer-implemented method as claimed in the appended claims.

According to an aspect of the invention there is provided a control system for a hydrogen fuelled internal combustion engine of a vehicle, the control system comprising one or more controllers, the control system is configured to: receive an indication of a pressure of hydrogen in a hydrogen storage system; in dependence on the pressure being above a threshold pressure value, operate the internal combustion engine in a first mode by controlling a fuel injector to inject hydrogen gas from the storage system into a cylinder of the internal combustion engine within a first fuel injection window; and in dependence on the pressure being below the threshold pressure value, operate the internal combustion engine in a second mode by controlling the fuel injector to inject the hydrogen gas into the cylinder within a second fuel injection window, wherein the first fuel injection window extends later into the compression stroke than the second fuel injection window. Optionally, the hydrogen storage system comprises one or more fuel tanks connected to a fuel line. The pressure of hydrogen in the hydrogen storage system may be a pressure of hydrogen in a fuel tank of the hydrogen storage system which is currently in use.

A late injection serves two purposes, to help prevent early ignition of the hydrogen gas and also to improve the thermal efficiency by providing a stratified mixture at the point of ignition. However, late injection requires a high injection pressure, necessitating either a compressor or a high fuel tank pressure. As the fuel tank pressure declines as the fuel is depleted, injecting at a high pressure without a compressor reduces the range of the vehicle. Therefore, switching the mode of operation when the fuel tank pressure reduces below a threshold enables the exploitation of the benefits of late injection when possible without reducing the range of the vehicle.

Optionally, the compression stroke comprises a first period and a second period subsequent to the first period, wherein the first fuel injection window extends into the second period and the second fuel injection window is entirely contained in the first period. Thus, there are no late injections of fuel when the fuel tank pressure is not sufficiently high, facilitating an extended range for the vehicle.

The second period may correspond to a final period of the compression stroke such that injection of hydrogen during the second period results in a stratified mixture in the cylinder during ignition. Beneficially, a stratified mixture burns with improved thermodynamic efficiency as a result of lower wall heat losses. The first period may correspond to an initial period of the compression stroke such that injection of hydrogen during the initial period results in a substantially homogeneous mixture in the cylinder during ignition.

Optionally, the second period begins at a mid-point of the compression stroke. For example, the second period may be defined between the mid-point and top dead center (TDC). Optionally, the second period extends past TDC. The mid-point of the compression stroke can be defined as the point in the compression stroke wherein the crank angle is 90 degrees before TDC. Alternatively, the second period may begin 80 degrees, 70 degrees or 60 degrees before TDC.

The first period may be defined as up to the mid-point of the compression stroke. The first period may begin prior to an inlet valve closing time. For example, the first period may be between bottom dead centre (BDC) and the mid-point. However, the first period may begin prior to BDC.

Optionally, the first fuel injection window may overlap with both the first period and the second period of the compression stroke. Optionally, in the first mode the control system is configured to control the fuel injector to provide at least two injections of the hydrogen gas during the first injection window including an early injection starting during the first period of the compression stroke and a late injection starting during the second period of the compression stroke. The early injection may have a smaller volume than the late injection. Beneficially, including a small early injection helps to control NOx emissions and reduce engine noise. The larger late injection provides the improvements in thermal efficiency.

Optionally, the first injection window overlaps with an ignition event. A duration of the late injection may overlap with the ignition event. Alternatively, a starting time for the late injection may be after the ignition event. Such a late injection can beneficially further improve the thermodynamic efficiency of combustion.

Optionally, in the second mode the control system is configured to control the fuel injector to inject the hydrogen gas in a single injection during the second injection window. As the mixture will be homogeneous, there is no benefit to providing multiple injections and so thus providing only a single injection is more efficient.

In some embodiments, the control system is configured to determine an injection pressure of the hydrogen gas in dependence on the mode of operation and control the fuel injector to inject the hydrogen gas at the determined injection pressure. Optionally, the control system is configured to determine the injection pressure as substantially equal to the threshold pressure value during operation in the first mode. For example, the injection pressure may be determined as equal to the threshold pressure. The injection pressure may be constant in the first mode.

Optionally, the control system is configured to determine the injection pressure as equal to or less than the measured pressure of the hydrogen in the hydrogen storage system during operation in the second mode. Beneficially, no compressor is required. The injection pressure may be variable in the second mode. For example, the injection pressure may be periodically updated in the second mode. The injection pressure may be determined to track the measured pressure of the hydrogen in the storage system in the second mode. In this way, the injection pressure can beneficially be maximised based on the current pressure of the hydrogen.

Optionally, the control system is configured to: receive an indication of an in-cylinder pressure across the compression stroke; and determine the second fuel injection window such that the injection pressure is at least two times higher than the in-cylinder pressure during injection of the hydrogen gas. Beneficially, this provides choked flow for the injection. In some embodiments, in-cylinder pressure is monitored during operation. Alternatively, in-cylinder pressure may be characterised across the compression stroke in an initial configuration stage before operation. The in-cylinder pressure may be in the range 0 to 10 bar at a bottom dead center of the compression stroke and in the range 50 to 150 bar at a top dead center of the compression stroke. The pressure may be considered a relative pressure.

Optionally, the threshold pressure value is in the range 100-200 bar. The threshold pressure value may be defined as greater than the maximum value of in-cylinder pressure.

Optionally, the pressure of hydrogen in the hydrogen storage system is in the range 0 bar to 800 bar.

According to another aspect, there is provided an internal combustion system for a vehicle comprising: a hydrogen fuelled internal combustion engine; a hydrogen storage system; and the control system of the above aspect. Optionally, the internal combustion system comprises at least one pressure sensor for measuring a pressure of the hydrogen in the hydrogen storage system. Alternatively, the control module may be arranged to infer the pressure of the hydrogen in the hydrogen storage system based on a predefined starting pressure by monitoring fuel use.

According to another aspect, there is provided a vehicle comprising a control system or an internal combustion system according to the above aspects. Optionally, the vehicle is a hybrid vehicle. This can provide an additional benefit because the electric motor can produce power in response to fluctuating load, and the hydrogen internal combustion engine can be put to use at maximum efficiency.

According to another aspect there is provided a method for controlling a hydrogen fuelled internal combustion engine of a vehicle, the method comprising: receiving an indication of a pressure of hydrogen in a hydrogen storage system; in dependence on the pressure being above a threshold pressure value, operating the internal combustion engine in a first mode by controlling a fuel injector to inject hydrogen gas from the storage system into a cylinder of the internal combustion engine within a first injection window; and in dependence on the pressure being below the threshold pressure value, operating the internal combustion engine in a second mode by controlling the fuel injector to inject the hydrogen gas into the cylinder within a second fuel injection window, wherein the first fuel injection window extends later into the compression stroke than the second fuel injection window.

According to another aspect, there is provided a non-transitory computer-readable medium comprising computer-readable instructions that, when executed by a processor, cause performance of the method of the above aspect.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a hydrogen fuelled internal combustion engine and control system according to an embodiment;
Figure 2 shows an internal combustion system according to an embodiment;
Figure 3 shows an annotated illustration of cylinder pressure against crank angle;
Figure 4 is a flow chart illustrating a method according to an embodiment;
Figure 5 is an illustration of thermal efficiency in each of two modes of operation;
Figure 6 shows a vehicle according to an embodiment; and
Figure 7 is a schematic illustration of the control system.

### DETAILED DESCRIPTION

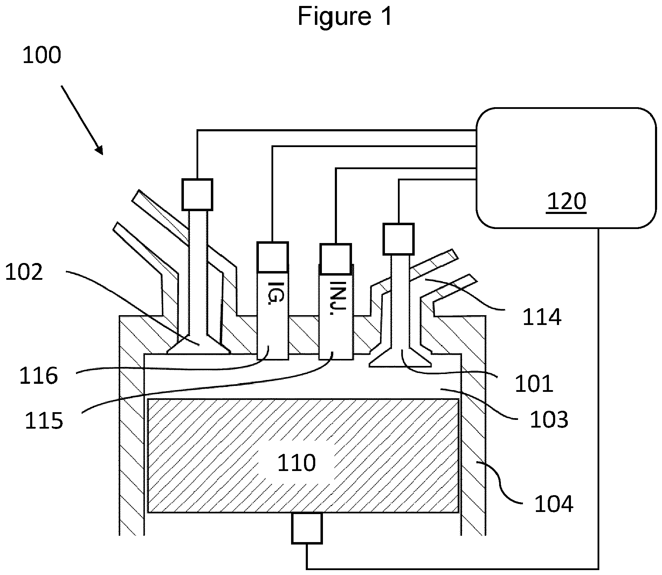

With reference to Figure 1, there is illustrated a hydrogen fuelled internal combustion engine (ICE) 100 and associated control system 120 for a vehicle according to the present invention.

The ICE 100 utilises hydrogen gas as a fuel. Hydrogen gas has beneficial properties as a fuel for internal combustion engines. Some of these benefits relate to hydrogen having a wide flammability range in comparison with other fuels such as gasoline or diesel. As a result, hydrogen can be combusted over a wide range of fuel-air mixtures including a lean fuel-air mixture in which the amount of fuel is less than the stoichiometric amount needed for combustion with a given amount of air. Fuel economy for a lean mixture is greater, and the combustion reaction is more complete. Also, the combustion temperature is usually lower, which reduces the pollutants (in particular NOx) emitted.

The ICE 100 operates by mixing hydrogen fuel with air inside a cylinder 104. The air-fuel mixture is ignited, and expansion of the gases produced by combustion of the mixture applies force to a piston 110 to propel the vehicle powered by the ICE 100. Although only one cylinder 104 of the ICE 100 is shown, the ICE 100 may have additional cylinders 104. These cylinders 104 may be connected by a crankshaft of the vehicle.

The cylinder 104 defines a combustion chamber 103 in which the combustion of a fuel-air mixture takes place. Air is introduced to the combustion chamber 103 through an intake valve 101 from an intake duct 114. The hydrogen gas is directly injected into the combustion chamber 103 through a fuel injector 115. Following combustion of the air-fuel mixture, exhaust gases are expelled from the combustion chamber 103 via an exhaust valve 102. The exhaust valve 102, intake valve 101 and fuel injector 115 are typically located at a first end of the combustion chamber 103. The cylinder 104 comprises a piston 110 which moves inwards and outwards in the combustion chamber 103 from a second end to vary the volume and pressure in the combustion chamber 103 in a cycle. The piston 110 moves in the cycle between a top dead center (TDC) position where it is nearest the first end and the volume of the combustion chamber is at a minimum, and a bottom dead center (BDC) position where the piston is farthest from the first end and the volume of the combustion chamber is at a maximum.

Particular embodiments of the invention will be described with reference to the ICE 100 being a 4-stroke engine and operating in the cycle described below, however the present invention can be applied to other engine types, such as a 2-stroke, 6-stroke or the like.

During an intake stroke of the ICE 100, the intake valve 101 is open and the exhaust valve 102 is closed. The piston 110 moves downward from TDC to BDC. The increasing volume of the combustion chamber 103 coupled with the opening of the intake valve 101 allows the air to enter the combustion chamber 103 from the intake duct 114.

During a compression stroke of the ICE 100, the piston 110 moves back upwards from BDC to TDC. The intake valve 101 is closed. The closure of the intake valve 101 may be at the beginning of the compression stroke or early in the compression stroke, between BDC and a midpoint of the compression stroke. Alternatively, the closure of the intake valve 101 may be prior to BDC, i.e., before the compression stroke begins. The timing of the closure will depend on the engine load and speed. Those skilled in the art refer to the timing of events during an engine cycle in relation to the angle of the crank shaft. After the closure of the intake valve 101, the movement of the piston 110 causes the pressure and temperature of the combustion chamber 103 to increase. The hydrogen fuel is injected into the combustion chamber 103 during the compression stroke by the fuel injector 115. The timing of this injection will depend on various factors, as will be explained. It can be beneficial to inject the hydrogen fuel as late as possible, to reduce the likelihood of pre-ignition and also to provide a more stratified hydrogen-air mixture, which can improve the thermal efficiency of the combustion due to the fuel being concentrated away from the walls of the cylinder 104. However, late in the compression stroke the pressure in the combustion chamber is significantly higher than the beginning of the compression stroke. Therefore, a higher injection pressure is required which typically requires a compressor for the hydrogen fuel in order to provide sufficient range for the vehicle for a given supply of hydrogen, that is, before the pressure of the supply drops below a threshold at which it would no longer be high enough by itself to permit late injection. The present disclosure provides a method of determining the timing for the injection of fuel to improve the efficiency of the ICE 100 without using a compressor. This is achieved by operating the ICE 100 to time the fuel injection differently depending on a current pressure of hydrogen fuel stored in a storage system of the vehicle, as will be explained.

During the compression stroke, ignition of the air-fuel mixture in the combustion chamber 103 is triggered by an ignition source 116. The ignition source 116 may in some embodiments be a spark plug which receives a high voltage pulse to generate a spark. However, other ignition sources are possible, such as a glow plug or a pre-chamber having a spark or glow plug. The present invention could also be applied to systems using compression ignition (CI). The ignition source 116 causes the combustion of the fuel-air mixture in the combustion chamber.

During a working stroke, the pressure of combustion gases produced by the combustion pushes the piston 110 downwards from TDC back to BDC and the energy produced by the combustion is converted into kinetic energy for rotating a crankshaft of the vehicle. Near BDC, the exhaust valve 102 is opened and during a final exhaust stroke, the piston 110 is moved upwards back to TDC expelling the combustion gases from the combustion chamber 103.

Although the above description relates to a 4-stroke engine, the present invention provides a means of timing the injection of hydrogen fuel during the compression stroke, and thus is applicable to any ICE, such as a 2-stroke engine, for example.

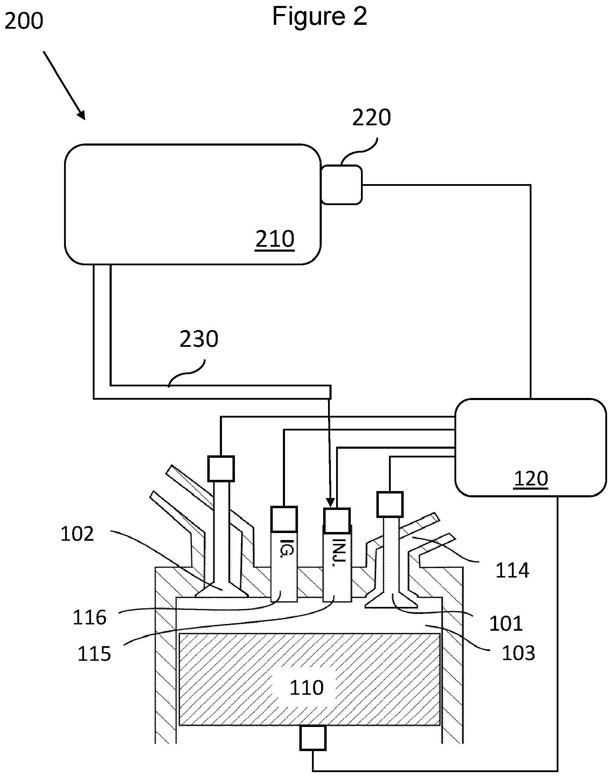

With reference to Figure 2, there is illustrated an internal combustion system 200 for a vehicle including the hydrogen fuelled ICE 100 as shown in Figure 1. The internal combustion system further comprises a hydrogen storage system 210. The hydrogen storage system 210 comprises one or more fuel tanks for storing the hydrogen gas. In some embodiments the hydrogen storage system 210 may comprise a single fuel tank for storing the hydrogen gas for the vehicle, however alternatively the hydrogen storage system 210 may comprise a plurality of fuel tanks. This plurality of fuel tanks may be interconnected such that the fuel tanks have a common internal pressure. However, in other embodiments, the plurality of fuel tanks may independently supply the ICE 100 and so have independent internal pressures. The hydrogen storage system 210 includes at least one fuel line 230 for supplying hydrogen gas from the fuel tank(s) to the fuel injector 115. The supply of the hydrogen gas through the fuel line 230 and the resultant injection pressure of the fuel injector 115 is in part dictated by the pressure of the hydrogen gas in the storage system 210. However, the fuel line 230 may also include pressure reducing means, such as pressure reducing valves, which may be controlled to reduce the injection pressure compared to the pressure of the hydrogen gas in the storage system 210. In the absence of any compressor in the internal combustion system 200, the peak possible injection pressure is limited by the pressure of the hydrogen gas in the storage system 210.

The internal combustion system 200 further comprises a control system 120 for controlling the hydrogen fuelled ICE 100. The control system 120 is configured to control the fuel injector 115. The control system 120 is arranged to determine a window for injecting the hydrogen gas into the combustion chamber 103 and control the fuel injector 115 to inject the hydrogen gas within the determined window.

As discussed, it is desirable to inject the hydrogen gas into the combustion chamber 103 as late as possible during the compression stroke to increase the efficiency of the combustion.

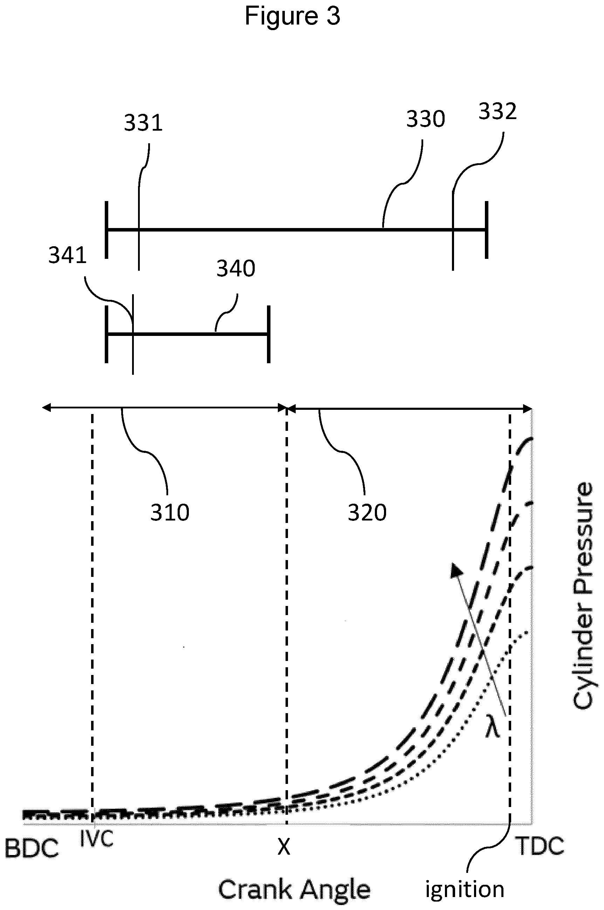

However, the cylinder pressure (the pressure of the gases inside the combustion chamber 103) increases during the compression stroke. Thus, a higher injection pressure is required the later the injection is made. An annotated illustration of a compression stroke is shown in Figure 3. The cylinder pressure is plotted against the crank angle of the ICE 100 during a compression stroke. Across the compression stroke, the piston 110 is moved from BDC-(which can be considered a crank angle of 180° before TDC) to TDC (a crank angle of 0°). As the crank angle moves towards TDC, the cylinder pressure increases. The relationship between crank angle and cylinder pressure is non-linear and the gradient also increases with crank angle for a large portion of the compression stroke. A range of different curves are plotted, each curve being representative of a different λ value for the hydrogen-air mixture. The λ value is indicative of the ratio of actual air-fuel ratio to stoichiometry for a given mixture and increases for lean air-fuel mixtures. Thus, the cylinder pressure increases for leaner mixtures. The λ value will typically be dependent on the engine load.

According to the present invention, the control system 120 is arranged to receive an indication of a pressure of hydrogen in the hydrogen storage system 210 and determine the window for injecting the hydrogen gas according to the received pressure. If the pressure of hydrogen in the hydrogen storage system 210 is sufficiently high, the control system 120 is arranged to determine the window to extend relatively late into the compression stroke to incorporate a late injection of hydrogen. This late injection serves the dual purpose of preventing early ignition of the hydrogen and facilitating a stratified mixture of air and hydrogen to obtain the associated improvement in thermal efficiency.

However, such a late injection requires a high injection pressure. Without the use of a compressor, this is only possible if the pressure of the hydrogen in the storage system 210 is sufficiently high. As the pressure of the hydrogen in the storage system 210 declines as the fuel is depleted, injecting at a high injection pressure without a compressor reduces the range of the vehicle. Therefore, beneficially adjusting the injection window in dependence on the fuel tank pressure according to the present invention enables the exploitation of the benefits of late injection when possible without reducing the range of the vehicle.

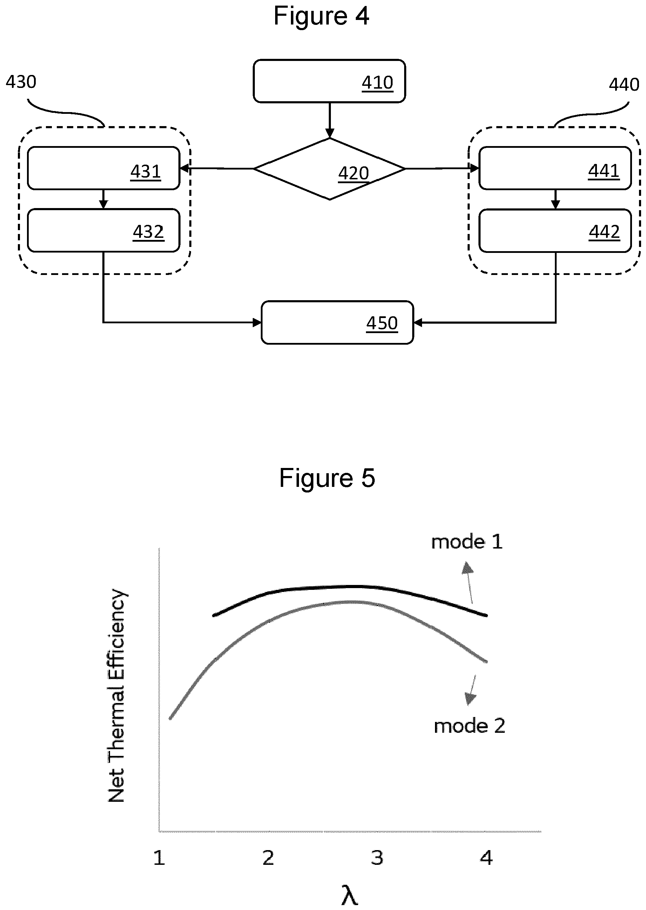

A method performed by the control system 120 to determine the injection window according to an embodiment of the invention is shown in Figure 4.

In block 410, the control system 120 receives an indication of a current pressure of hydrogen in the hydrogen storage system 210. In some embodiments, the internal combustion system 200 comprises a pressure sensor 220 associated with the hydrogen storage system 210. The pressure sensor is arranged to measure a pressure of hydrogen gas in the hydrogen storage system 210 and provide an indication of the pressure to the control system 120 in step 410. Thus, the control system 120 can receive updated pressure measurements during operation. However, in other embodiments the current pressure may not be directly sensed, but instead inferred from other vehicle metrics. For example, the control system 120 may be provided with a starting value of pressure indicative of the storage system 210 at full capacity, and an indication of fuel usage since the vehicle was last refuelled.

Typically, a maximum relative pressure value of hydrogen in the storage system 210 is between 600 to 800 bar, e.g., around 700 bar. This maximum pressure value corresponds to the storage system 210 at full capacity. However, the present invention can be extrapolated for use at higher or lower values of maximum pressure.

In block 420, the control system 120 determines whether the current pressure received in block 410 is above or below a threshold pressure value. The threshold pressure value is selected such that when the current pressure is above the threshold pressure value, the pressure of the hydrogen in the storage system is sufficient to generate an injection pressure high enough to facilitate a 'late' injection during the compression stroke.

To characterise what would be defined as a 'late' injection, the compression stroke may be effectively divided into a first period 310 and a second period 320 also illustrated on Figure 3. The first period 310 corresponds to an initial portion of the compression stroke, and the second period 320 corresponds to a later portion of the compression stroke. The second period 320 may be defined as the portion of the compression stroke wherein injection of hydrogen at this time results in a stratified mixture in the cylinder during ignition. That is, the second period 320 may be defined as the portion of the compression stroke wherein gains in thermal efficiency are obtained due to the stratification. Thus, the first period 310 may be defined as the portion of the compression stroke wherein injection of hydrogen during this period results in a substantially homogeneous mixture in the cylinder during ignition.

The first period 310 and the second period 320 are delineated by a threshold crank angle X as shown on Figure 3. It will be appreciated that the level of stratification is a continuous scale which increases with increasing crank angle. The threshold crank angle X may thus vary depending on the desired level of stratification for the late injection. However, in some embodiments, the threshold crank angle X may be around a mid-point of the compression stroke, that is in the region of 90° before TDC. However, in other embodiments the threshold crank angle X may be for example 100°, 80°, 70°, 60° before TDC or thereabouts. The first period 310 may be considered to start at BDC or otherwise prior to a closing point of the intake valve 101 as injection of fuel to attain a homogeneous mixture is possible at any time in this region. The second period 320 may be considered to extend from the threshold crank angle X, across the time of ignition to TDC or past TDC.

The threshold pressure value may therefore be defined such that if the pressure of hydrogen in the storage system is greater than the threshold pressure value, injection in the second period 320 is possible. For example, the threshold pressure value may be set in the range 100 bar to 200 bar depending on the configuration of the ICE 100. In some embodiments, this threshold pressure value may be defined as greater than a maximum value of cylinder pressure during the compression stroke, i.e., greater than the peak cylinder pressure shown in Figure 3.

It is desirable for the injection pressure to be greater than twice the in-cylinder pressure during injection, as this provides choked flow. Therefore, the threshold pressure value may be defined as at least twice the cylinder pressure in the second period 320.

If the pressure is above the threshold pressure value, the method proceeds to block 430 and the control system 120 operates the ICE 100 in a first mode. The first mode may be referred to as a high injection-pressure mode, in which a late fuel injection is utilised to improve the thermal efficiency of combustion.

In the first mode, the control system 120 is arranged to control the fuel injector 115 to inject the hydrogen gas within a first fuel injection window 330. An example first fuel injection window 330 is illustrated on Figure 3. The first fuel injection window 330 extends at least into the second period 320 to allow for a late injection within the second period 320. The first fuel injection window 330 may in some embodiments extend across the entirety of the compression stroke, or even past the end of the compression stroke.

If the pressure is below the threshold pressure value, the method proceeds to block 440 and the control system 120 operates the ICE 100 in a second mode. The second mode may be referred to as a low injection-pressure mode, in which the timing of the fuel injection is limited by the pressure of the hydrogen in the storage system such that a late injection during the second period 320 is not feasible. In the second mode, the control system 120 is arranged to control the fuel injector 115 to inject the hydrogen gas within a second fuel injection window 340. An example second fuel injection window 340 is illustrated on Figure 3. The first fuel injection window 330 extends later into the compression stroke than the second fuel injection window 340.

The second fuel injection window 340 may be entirely contained in the first period 310 as the pressure in the storage system is insufficient to enable an injection in the second period 320 to provide a stratified burn. Within that constraint, the second fuel injection window 340 may be determined to extend as far into the compression stroke as possible given the current pressure value received to maximise the potential benefit. Thus, in the second mode, the second fuel injection window 340 may be dynamically updated (and reduced) as the pressure of the hydrogen in the storage system 210 decreases.

Returning to Figure 4, the control system 120 is configured to determine (a) an injection pressure of the hydrogen gas and (b) an injection schedule for the hydrogen gas. Both steps (a) and (b) are performed in dependence on whether the mode of operation is in the first mode or the second mode.

During operation in the first mode, in sub-block 431 the control system 120 is configured to determine the injection pressure as equal to the threshold pressure value. If the current pressure received in block 410 is greater than the threshold pressure value, the injection pressure can be reduced to the threshold pressure value through pressure releasing means on the fuel line 230, as discussed. In this way, the injection pressure can be kept constant in the first mode.

In sub-block 432, the control system 120 is configured to determine the injection schedule for the hydrogen gas. The injection schedule is determined to be contained within the first injection window 330 and include one or more injections of hydrogen fuel. In the first mode, the injection schedule is independent of the injection pressure as the injection pressure is always sufficiently high to facilitate injection in the second period 320. Thus, the injection schedule can be determined to maximise the thermodynamic efficiency.

In some embodiments, in the first mode the injection schedule is determined to comprise at least two injections of hydrogen fuel. A first early injection 331 is provided during the first period 310 of the compression stroke to provide a homogeneous burn upon combustion, and a late injection 332 is provided during the second period 320 of the compression stroke to provide a stratified burn upon combustion. The early injection 331 may be smaller in volume than the late injection 332. Delineating the injections in this way provides additional benefits as including a small early injection helps to control NOx emissions and engine noise. Then, the late injection 332 provides the bulk of the fuel which can be adjusted according to the required load. The late injection 332 may in some embodiments be scheduled to overlap with, or begin subsequently to, the ignition event. This timing can further improve the thermodynamic efficiency of the combustion.

During operation in the second mode, in sub-block 441 the control system 120 is configured to determine the injection pressure as equal to or less than the current pressure of the hydrogen in the hydrogen storage system 210. In the second mode, the injection pressure is determined to be variable as the pressure of the hydrogen in the hydrogen storage system 210 will be continually reducing as the fuel is depleted. The injection pressure may therefore be periodically updated to track the current pressure of the hydrogen. By continually adjusting the injection pressure to reflect the current pressure of the hydrogen, the injection pressure can be maximised at any given time in order to maximise the second fuel injection window.

In sub-block 442 the control system is arranged to determine the second fuel injection window 330. The second fuel injection window 330 is determined such that the injection pressure is higher than the cylinder pressure across the second fuel injection window 330. Thus, no compressor is required. In some embodiments, the second fuel injection window 330 is determined such that the injection pressure is at least two times higher than the cylinder pressure across the second fuel injection window 330. Ensuring the injection pressure is at least two times higher than the cylinder pressure provides a choked flow during the injection. As the cylinder pressure increases across the compression stroke, an end point of the second fuel injection window 340 can be defined as a point on the compression stroke beyond which the cylinder pressure exceeds 50% of the determined injection pressure.

The cylinder pressure may either be pre-determined across the compression stroke in an initial configuration stage, and thus may be a constant stored accessible to the control system 120 for each given crank angle and λ. Alternatively, a pressure sensor may be provided in the combustion chamber 103 which is configured to measure the cylinder pressure and communicate the measured cylinder pressure to the control system 120.

Once the end point of the second fuel injection window 340 is determined, the control system 120 determines a start point for the injection of hydrogen gas such that the duration of the injection is contained within the second fuel injection window 340. Within this constraint, the injection is scheduled as late as possible within the compression stroke to maximise any potential remaining efficiency benefit.

In the second mode, the control system 120 is configured to determine the injection schedule to include only a single injection during the second injection window 340. This is because in contrast to the first mode, the mixture will be substantially homogeneous so there will be no benefit to providing a second early injection. In this case, a single injection as late as possible is more efficient.

From either block 430 or block 440, the method proceeds to block 450. In block 450, the control system 120 is arranged to control the fuel injector 115 to inject the hydrogen gas at the determined injection pressure according to the determined schedule.

The method illustrated in Figure 4 may be performed periodically during operation of the ICE 100 to reflect the current pressure of hydrogen in the storage system 210 at any given time. Thus, the efficiency of the injection timing can be effectively maximised.

With reference to Figure 5, the improvement in efficiency attained by utilising the first mode where possible is illustrated. When the ICE 100 is operated according to the first mode to include a stratified burn, the net thermal efficiency is increased across all λ values. However, by flexibly adjusting to the second mode when the pressure of the stored hydrogen drops below the threshold, the range of the vehicle is effectively retained. Thus, the ICE 100 is effectively tailored to achieve a maximum thermal efficiency across the whole of the fuel capacity without requiring a compressor.

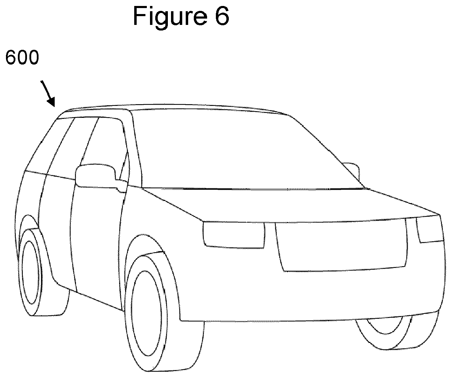

As shown in Figure 6, the internal combustion system 200 is installed in a vehicle 600. The vehicle 600 in the present embodiment is an automobile, such as a wheeled vehicle, but it will be understood that the internal combustion system 200 may be used in other types of land vehicle. The vehicle 600 may in some embodiments be a hybrid vehicle. Provision of the internal combustion system 200 in a hybrid vehicle 600 provides some additional benefits because an electric motor of the hybrid vehicle can produce additional power in response to fluctuating load, and the hydrogen ICE 100 can be put to use at maximum efficiency at all times.

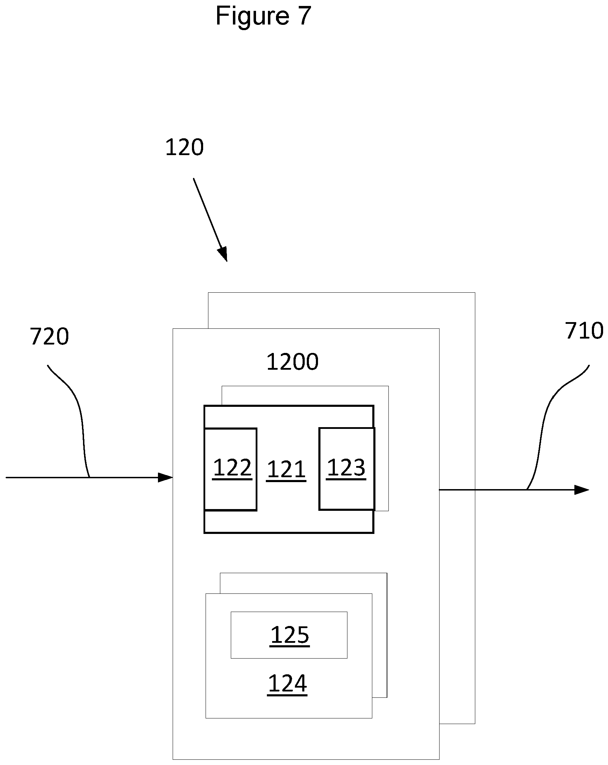

With reference to Figure 7, there is illustrated a simplified example of the control system 120 such as may be adapted to control the ICE 100. The control system 120 comprises one or more controllers 1200 and is configured to generate a control signal 710 for controlling the fuel injector 115 of the ICE 100. The control system 120 is configured to receive pressure data 720 indicative of a current pressure of hydrogen gas in the hydrogen storage system 210. The control system 120 is configured to determine, in dependence on the pressure data 720, a mode of operation for the ICE 100, and depending on the mode of operation, determine an injection pressure and an injection schedule for the fuel injector 115. The control system 120 is then configured to output a control signal to control the fuel injector 115 to inject the hydrogen gas into a cylinder of the ICE 100 according to the determined mode of operation.

It is to be understood that the or each controller 1200 can comprise a control unit or computational device having one or more electronic processors (e.g., a microprocessor, a microcontroller, an application specific integrated circuit (ASIC), etc.), and may comprise a single control unit or computational device, or alternatively different functions of the or each controller 1200 may be embodied in, or hosted in, different control units or computational devices. As used herein, the term "controller," "control unit," or "computational device" will be understood to include a single controller, control unit, or computational device, and a plurality of controllers, control units, or computational devices collectively operating to provide the required control functionality. A set of instructions could be provided which, when executed, cause the controller 1200 to implement the control techniques described herein (including some or all of the functionality required for the method described herein). The set of instructions could be embedded in said one or more electronic processors of the controller 1200; or alternatively, the set of instructions could be provided as software to be executed in the controller 1200. A first controller or control unit may be implemented in software run on one or more processors. One or more other controllers or control units may be implemented in software run on one or more processors, optionally the same one or more processors as the first controller or control unit. Other arrangements are also useful.

In the example illustrated in Figure 7, the or each controller 1200 comprises at least one electronic processor 121 having one or more electrical input(s) 122 for receiving one or more input signals, and one or more electrical output(s) 123 for outputting one or more output signals. The or each controller 1200 further comprises at least one memory device 124 electrically coupled to the at least one electronic processor 121 and having instructions 125 stored therein. The at least one electronic processor 121 is configured to access the at least one memory device 124 and execute the instructions 125 thereon.

The, or each, electronic processor 121 may comprise any suitable electronic processor (e.g., a microprocessor, a microcontroller, an ASIC, etc.) that is configured to execute electronic instructions. The, or each, electronic memory device 124 may comprise any suitable memory device and may store a variety of data, information, threshold value(s), lookup tables or other data structures, and/or instructions therein or thereon. In an embodiment, the memory device 124 has information and instructions for software, firmware, programs, algorithms, scripts, applications, etc. stored therein or thereon that may govern all or part of the methodology described herein. The processor, or each, electronic processor 121 may access the memory device 124 and execute and/or use that or those instructions and information to carry out or perform some or all of the functionality and methodology describe herein.

The at least one memory device 124 may comprise a computer-readable storage medium (e.g. a non-transitory or non-transient storage medium) that may comprise any mechanism for storing information in a form readable by a machine or electronic processors/computational devices, including, without limitation: a magnetic storage medium (e.g. floppy diskette); optical storage medium (e.g. CD-ROM); magneto optical storage medium; read only memory (ROM); random access memory (RAM); erasable programmable memory (e.g. EPROM ad EEPROM); flash memory; or electrical or other types of medium for storing such information/instructions.

Example controllers 1200 have been described comprising at least one electronic processor 121 configured to execute electronic instructions stored within at least one memory device 124, which when executed causes the electronic processor(s) 121 to carry out the method as hereinbefore described. However, it is contemplated that the present invention is not limited to being implemented by way of programmable processing devices, and that at least some of, and in some embodiments all of, the functionality and or method steps of the present invention may equally be implemented by way of non-programmable hardware, such as by way of non-programmable ASIC, Boolean logic circuitry, etc.

It will be appreciated that various changes and modifications can be made to the present invention without departing from the scope of the present application.

## Claims

1. A control system for a hydrogen fuelled internal combustion engine of a vehicle, the control system comprising one or more controllers, the control system is configured to:
receive an indication of a pressure of hydrogen in a hydrogen storage system;
in dependence on the pressure being above a threshold pressure value, operate the internal combustion engine in a first mode by controlling a fuel injector to inject hydrogen gas from the storage system into a cylinder of the internal combustion engine within a first fuel injection window; and
in dependence on the pressure being below the threshold pressure value, operate the internal combustion engine in a second mode by controlling the fuel injector to inject the hydrogen gas into the cylinder within a second fuel injection window,
wherein the first fuel injection window extends later into the compression stroke than the second fuel injection window.

2. The control system of claim 1, wherein the compression stroke comprises a first period and a second period subsequent to the first period, wherein the first fuel injection window extends into the second period and the second fuel injection window is entirely contained in the first period.

3. The control system of claim 2, wherein the second period corresponds to a final period of the compression stroke such that injection of hydrogen during the second period results in a stratified mixture in the cylinder during ignition.

4. The control system of claim 2 or 3, wherein the first period corresponds to an initial period of the compression stroke such that injection of hydrogen during the initial period results in a homogeneous mixture in the cylinder during ignition.

5. The control system of any of claims 2 to 4, wherein the second period begins at a mid-point of the compression stroke.

6. The control system of any of claims 2 to 5, wherein the first fuel injection window overlaps with both the first period and the second period of the compression stroke and wherein in the first mode the control system is configured to control the fuel injector to provide at least two injections of the hydrogen gas during the first injection window including an early injection starting during the first period of the compression stroke and a late injection starting during the second period of the compression stroke.

7. The control system of any preceding claim, wherein in the second mode the control system is configured to control the fuel injector to inject the hydrogen gas in a single injection during the second injection window.

8. The control system of any preceding clam, wherein the control system is configured to determine an injection pressure of the hydrogen gas in dependence on the mode of operation and control the fuel injector to inject the hydrogen gas at the determined injection pressure.

9. The control system of claim 8, wherein the control system is configured to determine the injection pressure as substantially equal to the threshold pressure value during operation in the first mode.

10. The control system of claim 8 or 9 wherein the control system is configured to determine the injection pressure as equal to or less than the measured pressure of the hydrogen in the hydrogen storage system during operation in the second mode.

11. The control system of any of claims 8 to 10 wherein the control system is configured to:
receive an indication of an in-cylinder pressure across the compression stroke; and
determine the second fuel injection window such that the injection pressure is at least two times higher than the in-cylinder pressure during injection of the hydrogen gas.

12. An internal combustion system for a vehicle comprising:
a hydrogen fuelled internal combustion engine;
a hydrogen storage system; and
the control system of any preceding claim.

13. A vehicle comprising a control system according to any of claims 1 to 11 or an internal combustion system according to claim 12.

14. A method for controlling a hydrogen fuelled internal combustion engine of a vehicle, the method comprising:
receiving an indication of a pressure of hydrogen in a hydrogen storage system;
in dependence on the pressure being above a threshold pressure value, operating the internal combustion engine in a first mode by controlling a fuel injector to inject hydrogen gas from the storage system into a cylinder of the internal combustion engine within a first injection window; and
in dependence on the pressure being below the threshold pressure value, operating the internal combustion engine in a second mode by controlling the fuel injector to inject the hydrogen gas into the cylinder within a second fuel injection window,
wherein the first fuel injection window extends later into the compression stroke than the second fuel injection window.

15. A non-transitory computer-readable medium comprising computer-readable instructions that, when executed by a processor, cause performance of the method of claim 14.
